# EUROPÄISCHE PATENTSCHRIFT

(11) **EP 2 678 922 B1**
(45) Veröffentlichungstag und Bekanntmachung des Hinweises auf die Patenterteilung: **13.03.2019**
(21) Anmeldenummer: 12703957.6
(22) Anmeldetag: 23.01.2012
(51) Int. Cl.: H02K 9/06

(54) **ANORDNUNG ZUR BESTIMMUNG DER WINKELSTELLUNG EINER WELLE UND ELEKTROMOTOR**
ARRANGEMENT FOR DETERMINING THE ANGULAR POSITION OF A SHAFT AND ELECTRIC MOTOR
DISPOSITIF POUR DÉTERMINER LA POSITION ANGULAIRE D'UN ARBRE ET D'UN MOTEUR ÉLECTRIQUE

(30) Priorität: 24.02.2011 DE 102011012357
(43) Veröffentlichungstag der Anmeldung: 01.01.2014
(73) Patentinhaber: Sew-Eurodrive GmbH & Co. KG, 76646 Bruchsal (DE)
(72) Erfinder: STANEK, Klaus, 76694 Forst (DE)
(86) Internationale Anmeldenummer: PCT/EP2012/000273
(87) Internationale Veröffentlichungsnummer: WO 2012/113496

(56) Entgegenhaltungen:
- DE-A1-102006 010 198
- DE-A1-102008 016 942
- DE-A1-102008 022 369
- DE-A1-102009 023 691
- Ferraris Acceleraion Sensor: "ACC 93 @BULLET ACC 94 Ferraris-Beschleunigungssensor", , 8 March 2007 (2007-03-08), XP055467154, Retrieved from the Internet: URL:http://www.tkd.com.ua/photos/texts/acc 93_acc94.pdf [retrieved on 2018-04-13]

## Beschreibung

Die Erfindung betrifft eine Anordnung zur Bestimmung der Winkelstellung einer Welle und einen Elektromotor.

Bei Elektromotoren ist es bekannt, auf der Rotorwelle B-seitig, also an einem axialen Endbereich einen Winkelsensor anzuordnen, der allerdings eine eigene Rotorwelle aufweist, die über eine Kupplung mit der Rotorwelle des Elektromotors verbunden werden muss.

Aus der DE 10 2009 023 691 A1 ist eine Anordnung zur Bestimmung der Winkelstellung einer Welle und ein Elektromotor bekannt.

Aus der DE 10 2008 016 942 A1 ist eine Haltevorrichtung für eine Leiterplatte bei einem Elektromotor bekannt.

Aus der DE 10 2008 022 369 A1 ist ein Elektromotor bekannt, bei welchem zur Erfassung eines vom Lüfterrad bei Betrieb abgegebenen periodischen magnetischen Signals eine Sensoreinheit vorgesehen ist, welche von einer Abschirmung aus einem weichmagnetischen gesinterten Pulverwerkstoff abgeschirmt ist.

Aus der DE 10 2006 010 198 A1 ist ein Direktantriebseinbaumotor mit spezieller Sensorbefestigung bekannt.

Aus der vom Europäischen Patentamt am 13.4.2018 gefundenen Internet-Veröffentlichung Ferraris Acceleraion Sensor: "ACC93 @BULLET ACC 94 Ferraris-Beschleunigungssensor" XP055467154 ist ein Ferraris-Sensor bekannt.

Der Erfindung liegt daher die Aufgabe zugrunde, einen Elektromotor möglichst kompakt weiterzubilden.

Erfindungsgemäß wird die Aufgabe bei der Anordnung nach den in Anspruch 1 und bei dem Elektromotor nach den in Anspruch 13 angegebenen Merkmalen gelöst.

Wichtige Merkmale der Erfindung bei der Anordnung zur Bestimmung der Winkelstellung einer Welle sind, dass die Welle in einem Gehäuseteil mit zumindest einem Lager gelagert ist,
wobei mit der Welle ein Lüfterrad drehfest verbunden ist,
wobei am Gehäuseteil eine Leiterplatte befestigt ist, insbesondere wobei die Normalenrichtung der Leiterplatte parallel zur Wellenachse ausgerichtet ist,
wobei an der zur Leiterplatte hin angeordneten Seite des Lüfterrades magnetisierte Bereiche, insbesondere einer Polscheibe, vorgesehen sind, die von auf der Leiterplatte angeordneten Sensoren detektierbar sind,
wobei die magnetisierten Bereiche drei konzentrische Spuren bilden und jeder Spur mindestens ein Sensor auf der Leiterplatte zugeordnet ist,
wobei in jeder Spur in Umfangsrichtung die axial ausgeführte Magnetisierungsrichtung abwechselnd ausgeführt ist, insbesondere also auf einen in axialer Richtung magnetisierten Nordpol-Bereich ein Südpol-Bereich folgt,
- wobei an der zur Leiterplatte hin angeordneten Seite des Lüfterrades magnetisierte Bereiche, insbesondere einer Polscheibe, vorgesehen sind, die von auf der Leiterplatte angeordneten Sensoren detektierbar sind, so dass der Winkelwert der Welle erfassbar ist,
- am Lüfterrad ein weiterer Dauermagnet angeordnet ist, dem auf der Leiterplatte ein Sensor zur Erfassung der Umdrehungszahl zugeordnet ist,
- mit der Leiterplatte ein Drehbeschleunigungssensor, insbesondere Ferraris-Sensor, verbunden ist, der einen elektrisch leitfähigen Ring umfasst, welcher mit dem Lüfterrad drehfest verbunden ist,
wobei die von den Sensoren erfassten Werte, insbesondere Winkelwert, Drehbeschleunigungswert und Umdrehungszahlwert, über dieselbe Kommunikationsschnittstelle, insbesondere über dieselbe digitale Kommunikationsschnittstelle, an eine weitere elektronische Schaltung, wie Umrichter und/oder übergeordnete Steuerung übertragen werden.

Von Vorteil ist dabei, dass der Elektromotor kompakt ausbildbar ist, nach Interpolation eine hohe Winkelauflösung erreichbar ist und möglichst wenige zusätzliche Teile notwendig sind. Denn die Polscheibe ist direkt am Lüfterrad anbringbar. Mittels der Mehrzahl von Spuren magnetisierten Materials ist eine hohe Auflösung erreichbar. Außerdem sind eine Vielzahl von Werten über die kommunikationsschnittstelle übertragbar und somit ohne großen Zusatzaufwand derselben Regelungseinheit zuführbar. Somit ist dort wiederum eine verbesserte Regelung ausführbar.

Besonders vorteilhaft ist, dass alle Sensoren auf einer einzigen Leiterplatte anordenbar sind und der Lüfter nur mit entsprechend gegenüberliegend angeordneten Magneten und/oder magnetisierten Bereichen ausgestattet werden muss. In jeweils verschiedenen Radialabständen sind dann die Sensoren beziehungswiese am Lüfter deren zugeordnete Dauermagnete oder magnetisierte Bereiche anordenbar.

Bei einer vorteilhaften Ausgestaltung ist auf der Leiterplatte ein Energiespeicher angeordnet zur Versorgung eines elektronischen Bauelements bei Ausfall der der auf der Leiterplatte angeordneten elektronischen Schaltung zugeordneten Versorgungsspannung. Von Vorteil ist dabei, dass eine netzunabhängige Energiequelle vorhanden ist und somit die gesamte Umdrehungszahl ab Montage und Herstellung detektierbar ist.

Bei einer vorteilhaften Ausgestaltung ist der Ring des Drehbeschleunigungssensors mit dem Lüfterrad stoffschlüssig verbunden. Von Vorteil ist dabei, dass die Drehbeschleunigung am metallischen Ring detektierbar ist, wobei der Lüfter im Wesentlichen aus nicht elektrisch leitfähigem Material aufbaubar ist.

Bei einer vorteilhaften Ausgestaltung sind die Sensoren und mit einer elektronischen Schaltung verbunden, die mit der Kommunikationsschnittstelle verbunden ist, wobei zumindest Teile der Kommunikationsschnittstelle, die Sensoren und die elektronische Schaltung auf der Leiterplatte angeordnet sind,

insbesondere wobei auf der Leiterplatte eine Auswerteelektronik angeordnet ist, der die Sensorsignale zugeführt werden und die Auswerteelektronik derart ausgeführt ist, dass
- ein Winkelwert für die Winkelstellung des Lüfterrades,
- ein Umdrehungszahlwert des Lüfterrades und
- ein Drehbeschleunigungswert des Lüfterrades
bestimmt wird. Von Vorteil ist dabei, dass Sensoren und die Teile schnell und einfach auf der Leiterplatte bestückbar sind und somit eine Sensoranordnung zur Erfassung der drei Werte und die zugehörige Auswertung mit gleichem axialen Raumbedarf wie eine Sensoranordnung mit nur einer einzigen erfassten physikalischen Größe benötigt. Vorteiligerweise werden die Daten über nur eine einzige Schnittstelle weitergeleitet, insbesondere in digitaler Weise. Auf diese Art ist eine besonders effektive und kompakte Herstellung der erfindungsgemäßen Ausführung ermöglicht.

Bei einer vorteilhaften Ausgestaltung weist die Kommunikationsschnittstelle zumindest ein Interface und/oder ein Steckverbinderteil auf. Von Vorteil ist dabei, dass die Schnittstelle in einfacher Weise herstellbar ist.

Bei einer vorteilhaften Ausgestaltung ist die Kommunikationsschnittstelle mit einer Regeleinheit eines Umrichters verbunden, welcher einen Elektromotor speist, dessen Rotorwelle die Welle ist, insbesondere welcher ein erfasster Motorstromwert zugeführt wird und die eine Motorspannung stellt. Insbesondere werden die erfassten Winkelwerte und Drehbeschleunigungswerte der Regeleinheit zugeführt. Von Vorteil ist dabei, dass ein verbessertes Regelverhalten erreichbar ist. Denn die Zuführung der Drehbeschleunigung zusätzlich zum Winkelwert stützt die Regelung mit einem physikalisch realen und erfassten Wert.

Bei einer vorteilhaften Ausgestaltung entwärmt der vom Lüfterrad erzeugte Kühlluftstrom das Gehäuseteil, insbesondere wobei das Lüfterrad ein Radiallüfterrad ist und der erzeugte radiale Kühlluftstrom von einer am Gehäuseteil vorgesehenen Lüfterhaube umlenkbar ist in im Wesentlichen axiale Richtung. Von Vorteil ist dabei, dass ein besonders einfaches Lüfterrad verwendbar ist und mittels der sowieso aus Sicherheitsgründen notwendigen Lüfterhaube eine Umlenkung des Kühlluftstroms ausführbar ist.

Bei einer vorteilhaften Ausgestaltung sind die Spuren in einer Scheibe, insbesondere Polscheibe, aus Ferritmaterial aufgebracht und/oder realisiert. Von Vorteil ist dabei, dass ein kostengünstiges Material verwendet wird.

Bei einer vorteilhaften Ausgestaltung sind die innerhalb der jeweiligen Spur in Umfangsrichtung vorgesehenen Periodenlängen des jeweiligen Magnetisierungsverlaufs nach dem Nonius-Prinzip zugeordnet. Von Vorteil ist dabei, dass eine eineindeutige Zuordnung der Sensorsignale oder Sensorsignalverteilung zur absoluten Winkelstellung des Lüfterrades ermöglicht ist.

Bei einer vorteilhaften Ausgestaltung sind drei Spuren vorgesehen, wobei die Anzahl der Nordpol-Bereiche
- in einer ersten Spur 2^N,
- in einer zweiten Spur 2^N - 1,
- in einer dritten Spur 2^N - 2^(N/2)
beträgt, wobei N eine ganze Zahl ist. Von Vorteil ist dabei, dass ein einfaches Nonius Prinzip anwendbar ist und somit eine eineindeutige Bestimmung der Winkelstellung mittels der drei Sensorsignale ermöglicht ist.

Bei einer vorteilhaften Ausgestaltung sind drei Spuren vorgesehen, wobei die Anzahl der Nordpol-Bereiche
- in einer ersten Spur 10 * N,
- in einer zweiten Spur 10 * N - 1,
- in einer dritten Spur 9 * N
beträgt, wobei N eine ganze Zahl ist. Von Vorteil ist dabei, dass ein einfaches Nonius Prinzip anwendbar ist und somit eine eineindeutige Bestimmung der Winkelstellung mittels der drei Sensorsignale ermöglicht ist.

Bei einer vorteilhaften Ausgestaltung ist in jeder Spur die Magnetisierungsrichtung axial ausgeführt und weist einen in Umfangsrichtung sinusförmig verlaufenden Betrag auf. Von Vorteil ist dabei, dass eine hohe Winkelauflösung erreichbar ist.

Bei einer vorteilhaften Ausgestaltung sind jeder Spur mindestens zwei Sensoren zugeordnet, insbesondere zur differentiellen Erfassung des Magnetisierungsverlaufs in Umfangsrichtung. Von Vorteil ist dabei, dass homogene Störfelder keine Störende Wirkung entfalten.

Bei einer vorteilhaften Ausgestaltung ist das Gehäuseteil für eine magnetfelderzeugende Einrichtung, wie Statorwicklung eines Elektromotors und/oder Bremsspulenwicklung einer elektromagnetisch betätigbaren Bremse, zumindest teilweise gehäusebildend. Von Vorteil ist dabei, dass eine Magnetfeld-abschirmende Wirkung durch das Gehäuseteil erreichbar ist, wenn dieses aus Aluminium oder Stahl ausführbar ist, wobei niederfrequente Felder besser durch Stahl und höher frequente Wechselfelder eher durch Aluminium abschirmbar sind.

Bei einer vorteilhaften Ausgestaltung ist zwischen Gehäuseteil und Sensoren ein Mittel zur Abschirmung magnetischer Felder vorgesehen. Von Vorteil ist dabei, dass in einfacher Weise Störungen eliminierbar sind.

Bei einer vorteilhaften Ausgestaltung sind die Sensoren Hallsensoren. Von Vorteil ist dabei, dass einfache kostengünstige Sensoren verwendbar sind.

Bei einer vorteilhaften Ausgestaltung ist auf der Leiterplatte eine Auswerteelektronik angeordnet, der die Sensorsignale zugeführt werden und die Auswerteelektronik derart ist ausgeführt, dass ein Winkelwert für die Winkelstellung des Lüfterrades bestimmt wird. Von Vorteil ist dabei, dass eine eineindeutige Bestimmung des Winkels ermöglicht ist.

Wichtige Merkmale bei dem Elektromotor sind, dass die Welle die Rotorwelle des Elektromotors ist und das Lüfterrad auf der Rotorwelle angeordnet ist.

Von Vorteil ist dabei, dass ein kompakter Antrieb geschaffen ist, dessen Winkelstellung eineindeutig bestimmbar ist aufgrund des Prinzips der magnetischen Detektion von mehreren Spuren. Dieses Prinzip ist im Gegensatz zu anderen Prinzipien gegen viele Störungen unanfällig, wie beispielsweise Einwirkung von Licht und Wärme oder auch Wasser.

Weitere Vorteile ergeben sich aus den Unteransprüchen.

Die Erfindung wird nun anhand von Abbildungen näher erläutert:

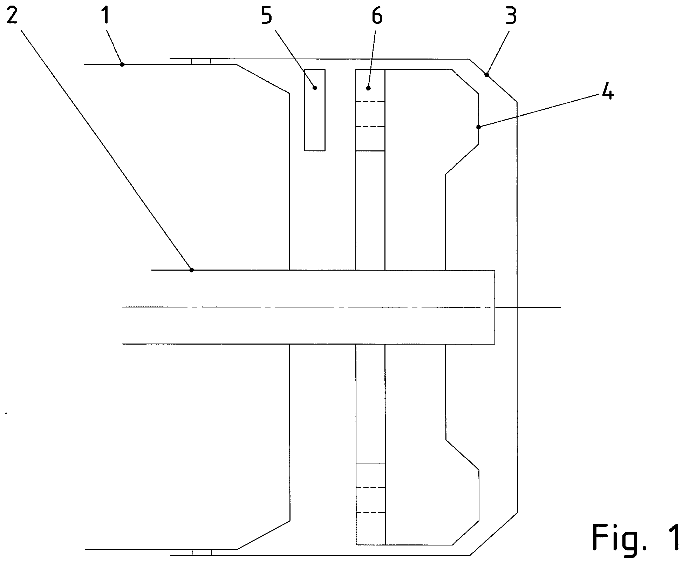

In der Figur 1 ist eine erfindungsgemäße Vorrichtung schematisch teilweise dargestellt.

Hierbei handelt es sich um eine Elektromaschine, insbesondere Elektromotor, der ein Gehäuseteil 1, insbesondere Lagerschild, umfasst, in welchem zumindest ein Lager vorgesehen ist zur Lagerung der Rotorwelle 2 der Maschine.

Am axialen Endbereich der Rotorwelle 2 ist ein Lüfterrad 4 drehfest mit der Rotorwelle 2 verbunden, so dass der vom Lüfterrad 4 angetriebene Kühlluftstrom am Gehäuseteil 1 vorbeiströmt und somit zur Kühlung des Motors, insbesondere auch des Stators, dient. Dabei ist der Stator auf der axial vom Lüfterrad abgewandten Seite des Gehäuseteils vorgesehen. Der Stator umfasst Statorwicklungen, die ein Drehfeld erzeugen und somit ein starkes Magnetfeld bewirken.

Das Lüfterrad 4 ist von einer Lüfterhaube 3 umgeben, so dass eine Lenkung, insbesondere Umlenkung, des Kühlluftstroms in einfacher Weise ermöglicht ist. Die Lüfterhaube 3 ist am Gehäuseteil 1 befestigt.

Trotz der abschirmenden Wirkung des Gehäuseteils 1, welches vorzugsweise aus Stahlguss oder Aluminium gefertigt ist, tritt also ein Teil des Magnetfeldes des Stators oder einer Bremsspule in den Bereich des Lüfterrades ein.

Das Lüfterrad 4 weist an seiner dem Gehäuseteil 1 zugewandten Seite eine Polscheibe auf, die magnetisiert ist. Dabei sind mindestens zwei in Umlaufrichtung verlaufende Spuren vorhanden, wobei die Magnetisierung in Umfangsrichtung abwechselnd ist. Jede Spur weist also für sich einen jeweils konstanten Radialabstand von der Achse der Rotorwelle auf. In Umfangsrichtung wechseln sich Bereiche mit unterschiedlicher Magnetisierung in axialer Richtung ab; auf einen Nordpol folgt also ein Südpol. Vorzugsweise verläuft der Betrag der Magnetisierung sinusförmig oder zumindest näherungsweise sinusförmig

Am Gehäuseteil 1 ist eine Leiterplatte 5, umfassend Sensoren, vorgesehen. Dabei ist jeder Spur ein Sensor auf der Leiterplatte 5 zugeordnet zur Detektion des Magnetfeldes. Vorzugsweise werden als Sensoren Hall-Sensoren verwendet. Die Signale der Sensoren werden einem Analog-Digital- Wandler zugeführt, der eine Auflösung von beispielsweise 10 bit oder mehr hat.

Die jeweilige Ausdehnung der Nordpol- und Südpol-Bereiche, also die Periodenlänge der im Wesentlichen sinusförmig verlaufenden Magnetisierung, in einer jeweiligen Spur ist in jeder Spur unterschiedlich und insbesondere derart gewählt, dass jeder Winkelstellung des Lüfterrades die Sensorsignale eineindeutig zuordenbar sind. Insbesondere sind dabei die Periodenlängen und die zugehörigen Phasendifferenzen zwischen den sinusförmigen Verläufen in den einzelnen Spuren nach de Nonius-Prinzip ausgeführt.

Vorzugsweise werden drei Spuren verwendet, wobei die Anzahl der in Umfangsrichtung vorgesehenen Nordpolbereiche in der erste Spur 56, in der zweiten Spur 63 und in der dritten Spur 64 beträgt. Aber auch andere Anzahlkombinationen, die nach dem Nonius-Prinzip gewählt sind, sind vorteilhaft verwendbar. Insbesondere ist eine Anzahlkombination vorteilhaft, bei der in der ersten Spur (2^N), in der zweiten Spur (2^N - 1) und in der dritten Spur (2^N - 2^(N/2)) gewählt wird, wobei N eine ganze Zahl ist. Alternativ ist auch eine Ausführung denkbar, bei der in der ersten Spur (9 * N), in der zweiten Spur (-1 + 10* N) und in der dritten Spur (10 * N) gewählt wird, wobei N eine ganze Zahl ist.

Auf diese Weise ist also während einer Umdrehung des Lüfterrades die Winkelstellung eindeutig aus den jeweiligen Sensorsignalen nach deren Analog-Digital-Wandlung bestimmbar.

Bei weiteren erfindungsgemäßen Ausführungsbeispielen ist im Bereich des Gehäuseteils 1 eine elektromagnetisch betätigbare Bremse vorgesehen. Diese umfasst auch eine Bremsspule, so dass ein starkes Magnetfeld, insbesondere auch in axialer Richtung erzeugbar ist, das zumindest teilweise vom Gehäuseteil 1 abschirmbar ist.

Bei weiteren erfindungsgemäßen Ausführungsbeispielen arbeiten die Sensoren differentiell. Hierzu sind jeder Spur mindestens zwei Sensoren zugeordnet, die in Umfangsrichtung voneinander beabstandet sind und jeweils die Magnetisierung derselben Spur detektieren. Zur Winkelbestimmung wird hier aber nur die Differenz der beiden zugehörigen Sensorsignale bestimmt, so dass ein homogener Anteil im Magnetfeld, also eine

Magnetfeldkomponente, die auf beide einer selben Spur zugeordnete Sensoren gleichermaßen wirkt, eliminiert wird. Als solcher Magnetfeldanteil ist beispielsweise das Magnetfeld der Bremse oder des Stators wirksam und wegen der differentiellen Erfassung eliminierbar.

Indem für jede Spur auf der Leiterplatte 5 jeweils eine differentielle Erfassung angeordnet ist, ist eine besonders störarme Information über den Winkel des Lüfterrades 4 erfassbar.

Auch bei thermisch bedingten Längenänderungen, also insbesondere Abstandsänderungen zwischen Leiterplatte 5 mit Sensoren und dem Lüfterrad 4 vermindert die differentielle Erfassung die Temperaturabhängigkeit der erfassten Winkelinformation.

Die Polscheibe 6 ist vorzugsweise aus gesintertem Ferritmaterial ausgeführt und mit dem Lüfterrad 4 klebend verbunden, das aus Aluminium ausgeführt ist.

Bei weiteren erfindungsgemäßen Ausführungsbeispielen ist die Polscheibe 6 vergossen in einem aus Kunststoff gefertigten Lüfterrad 4, insbesondere gespritzt gefertigten Lüfterrad 4.

Bei weiteren erfindungsgemäßen Ausführungsbeispielen ist bei der differentiellen Erfassung statt zwei Sensoren eine größere Anzahl von Sensoren in jeweiliger entsprechender Beabstandung anordenbar. Auf diese Weise ist eine noch störärmere Erfassung ausführbar.

Bei weiteren erfindungsgemäßen Ausführungsbeispielen ist der Analog-Digital-Wandler mit 12 bit oder mehr ausgeführt.

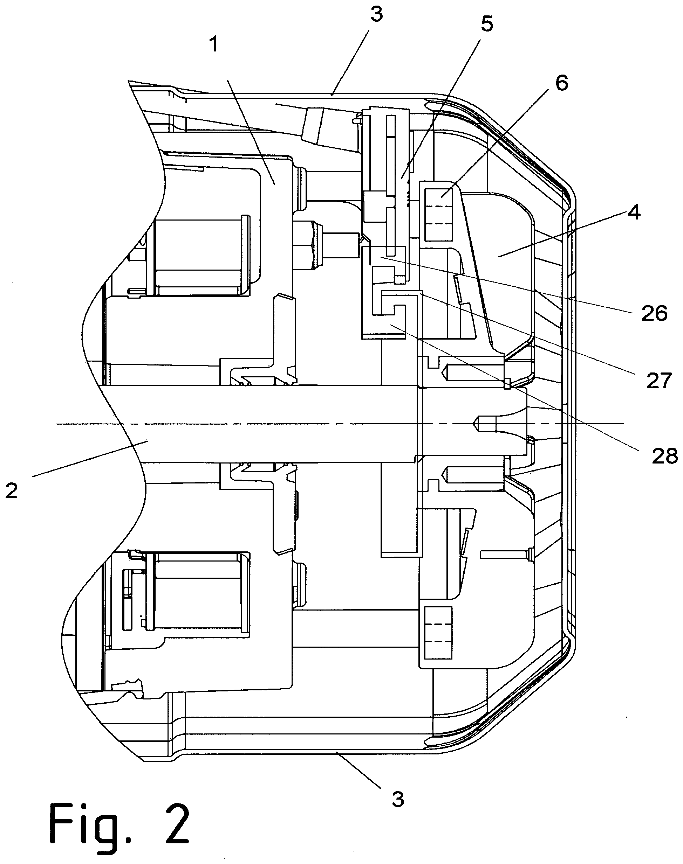

In Figur 2 ist ein weiteres erfindungsgemäßes Ausführungsbeispiel dargestellt. Dabei ist auf kleinerem Radialabstand als die drei Spuren ein Ferraris Sensor angeordnet, dessen Erregerwicklung 26 auf einem C-förmigen Kern angeordnet ist, auf welchem auch eine Aufnehmerwicklung 28 aufgewickelt ist. Insgesamt ist diese Spulenanordnung mit dem C-förmigen Kern schraubverbunden mit dem Gehäuseteil 1. Mit der Rotorwelle drehfest verbunden ist ein Wirbelstromring 27. Somit ist durch Bestromung der Erregerwicklung und Bestimmung der in der Aufnehmerwicklung 28 induzierten Spannung aufgrund der im Wirbelstromring 27 induzierten Wirbelströme eine Drehbeschleunigung bestimmbar. Die zur Ausführung der Bestimmung notwendigen elektronischen Bauteile sind ebenfalls auf der Leiterplatte 5 angeordnet. Somit sind alle Sensoren auf der Leiterplatte anordenbar und die zugehörigen Auswerteelektronikbauelemente ebenfalls. Auf diese Weise ist eine besonders einfache Fertigung ermöglicht. Außerdem sind die erfassten Werte in digitale Werte umwandelbar und somit von der Leiterplatte an ein anderes elektronisches Gerät, wie beispielsweise Umrichter oder übergeordnete Steuerung, ein digitaler Datenstrom übertragbar. Infolge der digitalen Übertragung und zugehörigen Ausbildung einer digitalen Kommunikationsschnittstelle ist ein hoher Datenstrom übertragbar, der nicht nur die nach dem Nonius -Prinzip erfassten Winkelwerte sondern auch die erfassten Drehbeschleunigungswerte aufweist.

Bei Zuführung dieser Daten ist eine Regeleinheit eines Umrichters mit besonders guten Regeleigenschaften realisierbar. Denn aus den jeweiligen erfassten Winkelwerten ist zwar eine Drehgeschwindigkeit der Rotorwelle bestimmbar, welche der Regeleinheit als Istwert zur Verfügung stellbar ist, jedoch ist daraus nur eine Drehbeschleunigung mit hohem Rauschanteil, also geringem Signal-Rausch-Verhältnis, bestimmbar. Zur Verbesserung des Regelverhaltens wird daher der Regeleinheit auch der erfasste Drehbeschleunigungswert zugeführt, der ein verbessertes Signal-Rausch-Verhältnis aufweist.

In Figur 2 ist der die Drehbeschleunigung erfassende Ferraris-Sensor (26, 27, 28) auf kleinerem Radialabstand angeordnet als die den Spuren gegenüberstehend angeordneten Hallsensoren. Auf diese Weise ist ein Verminderung von störenden Feldern erreichbar. Somit sind störende Einflüsse verringert.

In Figur 5 ist ein Umdrehungszähler zusätzlich zur Ausführung nach Figur 1 auf der Leiterplatte 5 integriert angeordnet. Dabei wird der magnetempfindliche Sensor mittels einer Abschirmung 11 vor den Magnetfeldern geschützt, welche von einer auf der vom Lüfter abgewandten Seite der Leiterplatte 5 angeordneten elektromagnetisch betätigbaren Bremse erzeugt werden. Somit ist das Magnetfeld eines auf dem Lüfter angeordneten zusätzlichen Dauermagneten 9 detektierbar mit einem sehr guten Signal-Rausch-Verhältnis.

Ein Energiespeicher, beispielsweise Batterie 10, ist mit der Leiterplatte verbunden und ermöglicht ein Erfassen der Umdrehungen auch bei Versorgungsstromausfall. Somit sind zur Detektion des vorbeidrehenden Magneten 9 beispielsweise Hallsensoren oder andere Energieversorgung benötigende Sensoren notwendig.

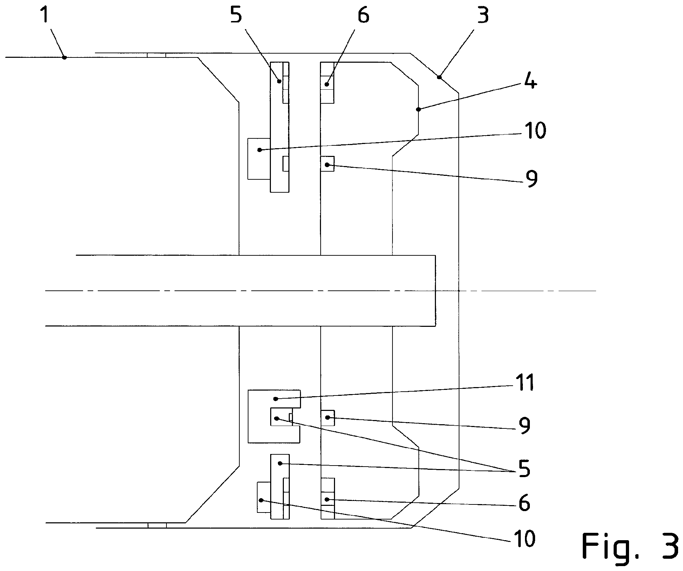

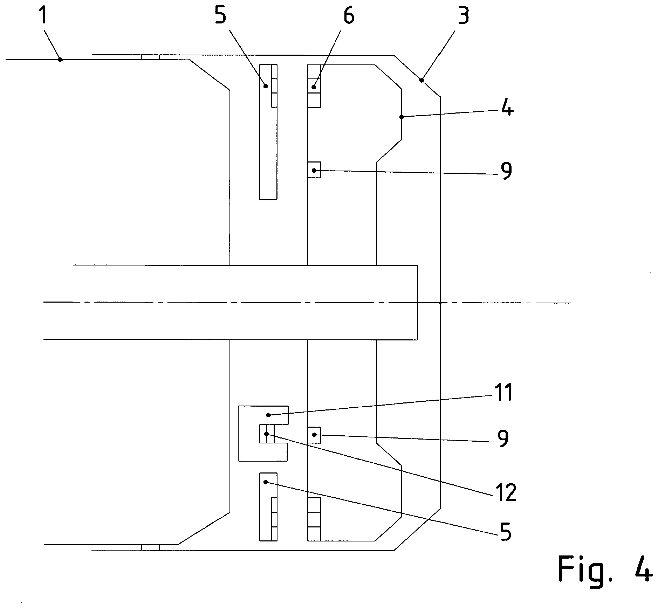

Wie in Figur 4 gezeigt, sind im Unterschied zur Figur 3 als Sensoren beim Vorbeidrehen des Dauermagneten 9 Energie erzeugende Sensoren verwendbar. Insbesondere sind als Sensor hierbei Impulsdrähte, also Wieganddrähte, oder Mikrogeneratoren einsetzbar. Dabei lösen die Impulsdrähte und Mikrogeneratoren an einer kritischen Winkelstellung des Dauermagneten 9 plötzlich aus und erzeugen dabei genügend Energie um nicht die elektronische Verarbeitung, insbesondere das Zählen, zu ermöglichen. Hierbei wird vorzugsweise FRAM Technologie bei den Zählbausteinen eingesetzt. Vor dem Auslösen wird der Impulsdraht abhängig von der Drehbewegung des Dauermagneten auf der atomaren Ebene langsam vorgespannt. Auch beim Mikrogenerator wird eine langsame Vorspannung ausgeführt und ein REED Kontakt genutzt, um bei der kritischen Winkelstellung ein plötzliches Auslösen zu erreichen und somit zum Freisetzen von genügend viel Energie zur Versorgung der Zählbausteine.

Vorteiligerweise sind die Sensoren auf der Leiterplatte 5 angeordnet. Somit sind die erfassten und vorverarbeiteten Werte über eine einzige Datenleitung digital übertragbar. Zusätzliche mechanische Steckverbinder oder Leitungen sind somit einsparbar.

Durch die Integration der Sensoren auf der Leiterplatte gemäß Figur 1 bis 4 ist jeweils die Sensorik im Wesentlichen im gleichen axialen Bauraum angeordnet und somit eine besonders kompakte Anordnung erreichbar. Insbesondere ist die axiale Baulänge unabhängig von der Anzahl der Sensoren, also Sensor für Winkelstellung der Rotorwelle, Sensor für die Anzahl der schon zurückgelegten ganzen Umdrehungen nach Figur 3 oder 4 und Sensor für die Drehbeschleunigung nach Figur 2.

Alle zugehörigen erfassten Werte, also Winkelwert, Umdrehungszahl und/oder Drehbeschleunigungswert, sind übertragbar mittels derselben Schnittstelle an einen Umrichter und/oder eine Steuerung. Dabei wird die Erfassung der Werte zeitlich nacheinander wiederholt ausgeführt, so dass der Verlauf der Werte im Wesentlichen in Echtzeit erfasst und übertragen wird.

Zusätzlich ist auf der Leiterplatte ein Temperatursensor angeordnet, dessen erfasster Wert über eine galvanische Trennung der auf der Leiterplatte angeordneten elektronischen Schaltung zugeleitet wird. Somit sind systematische Temperatureinflüsse eliminierbar. Der Temperaturwert wird ebenfalls über die Kommunikationsschnittstelle übertragen.

Bei weiteren erfindungsgemäßen Ausführungsbeispielen werden auch die Motortemperatur und/oder das von der Rotorwelle des Motors übertragene Drehmoment erfasst und die erfassten Werte über eine galvanische Trennung der auf der Leiterplatte angeordneten elektronischen Schaltung zugeleitet. Danach erfolgt wiederum die Übertragung über die Kommunikationsschnittstelle.

### Bezugszeichenliste

1 Gehäuseteil, insbesondere Lagerschild
2 Rotorwelle
3 Lüfterhaube
4 Lüfterrad
5 Leiterplatte, umfassend Sensoren
6 Polscheibe
9 Dauermagnet
10 Batterie
11 Abschirmung
12 Impulsdraht oder Microgenerator
26 Erregerwicklung
27 Wirbelstromring
28 Aufnehmerwicklung

## Patentansprüche

1. Anordnung zur Bestimmung der Winkelstellung einer Welle,
wobei die Anordnung
- ein Gehäuseteil (1),
- ein Lager,
- ein Lüfterrad (4),
- eine Leiterplatte (5)
- und eine Welle
aufweist,
wobei die Welle in dem Gehäuseteil (1) mit zumindest dem Lager gelagert ist,
wobei mit der Welle das Lüfterrad (4) drehfest verbunden ist,
wobei am Gehäuseteil (1) die Leiterplatte (5) befestigt ist, wobei die Normalenrichtung der Leiterplatte (5) parallel zur Wellenachse ausgerichtet ist,
wobei die Leiterplatte (5) zwischen dem Gehäuseteil (1) und dem Lüfterrad (4) angeordnet ist,
wobei
- an der zur Leiterplatte (5) hin angeordneten Seite des aus Kunststoff gefertigten Lüfterrades (4) magnetisierte Bereiche einer aus Ferritmaterial gefertigten Polscheibe (6) vorgesehen sind, die von auf der Leiterplatte (5) angeordneten Sensoren detektierbar sind, so dass der Winkelwert der Welle erfassbar ist,
wobei die magnetisierten Bereiche drei konzentrische Spuren bilden und jeder Spur mindestens ein Sensor auf der Leiterplatte zugeordnet ist,
wobei in jeder Spur in Umfangsrichtung die axial ausgeführte Magnetisierungsrichtung abwechselnd ausgeführt ist,
**dadurch gekennzeichnet, dass**
- am Lüfterrad (4) ein weiterer Dauermagnet (9) angeordnet ist, dem auf der Leiterplatte (5) ein Sensor zur Erfassung der Umdrehungszahl zugeordnet ist,
- mit der Leiterplatte (5) ein Drehbeschleunigungssensor, verbunden ist, der einen elektrisch leitfähigen Ring umfasst, welcher mit dem Lüfterrad (4) drehfest verbunden ist,
wobei die von den Sensoren erfassten Werte, also Winkelwert, Drehbeschleunigungswert und Umdrehungszahlwert, über dieselbe Kommunikationsschnittstelle, an eine weitere elektronische Schaltung übertragen werden,
wobei der Ring des Drehbeschleunigungssensors mit dem Lüfterrad (4) stoffschlüssig verbunden ist.

2. Anordnung nach Anspruch 1,
**dadurch gekennzeichnet, dass**
auf der Leiterplatte (5) zusätzlich ein Temperatursensor angeordnet ist, dessen erfasster Wert ebenfalls über die Kommunikationsschnittstelle übertragen wird.

3. Anordnung nach mindestens einem der vorangegangenen Ansprüche,
**dadurch gekennzeichnet, dass**
ist die Welle in einem Motor angeordnet und in den Statorwicklungen des Motors, ist ein Mittel zur Erfassung der Motortemperatur und/oder im Motor ist ein Mittel zur Erfassung des von der Welle durchgeleiteten Drehmoments angeordnet,
wobei die erfassten Werte über eine galvanische Trennung zu der auf der Leiterplatte (5) angeordneten elektronischen Schaltung zugeleitet werden,
wobei die erfassten Werte auch über dieselbe digitale Schnittstelle an die weitere elektronische Schaltung übertragen werden

4. Anordnung nach mindestens einem der vorangegangenen Ansprüche,
**dadurch gekennzeichnet, dass**
auf der Leiterplatte (5) ein Energiespeicher angeordnet ist zur Versorgung eines elektronischen Bauelements bei Ausfall der der auf der Leiterplatte (5) angeordneten elektronischen Schaltung zugeordneten Versorgungsspannung.

5. Anordnung nach mindestens einem der vorangegangenen Ansprüche,
**dadurch gekennzeichnet, dass**
die Sensoren und mit einer elektronischen Schaltung verbunden sind, die mit der Kommunikationsschnittstelle verbunden ist, wobei zumindest Teile der Kommunikationsschnittstelle, die Sensoren und die elektronische Schaltung auf der Leiterplatte (5) angeordnet sind,
wobei auf der Leiterplatte (5) eine Auswerteelektronik angeordnet ist, der die Sensorsignale zugeführt werden und die Auswerteelektronik derart ausgeführt ist, dass
- ein Winkelwert für die Winkelstellung des Lüfterrades,
- ein Umdrehungszahlwert des Lüfterrades und
- ein Drehbeschleunigungswert des Lüfterrades
bestimmt wird.

6. Anordnung nach mindestens einem der vorangegangenen Ansprüche,
**dadurch gekennzeichnet, dass**
die Kommunikationsschnittstelle zumindest ein Interface und/oder ein Steckverbinderteil aufweist.

7. Anordnung nach mindestens einem der vorangegangenen Ansprüche,
**dadurch gekennzeichnet, dass**
die Kommunikationsschnittstelle mit einer Regeleinheit eines Umrichters verbunden ist, welcher einen Elektromotor speist, dessen Rotorwelle (2) die Welle ist, welcher ein erfasster Motorstromwert zugeführt wird und die eine Motorspannung stellt,
**und/oder dass**
die erfassten Winkelwerte und Drehbeschleunigungswerte der Regeleinheit zugeführt werden.

8. Anordnung nach mindestens einem der vorangegangenen Ansprüche,
**dadurch gekennzeichnet, dass**
in jeder Spur in Umfangsrichtung auf einen in axialer Richtung magnetisierten Nordpol-Bereich ein Südpol-Bereich folgt.

9. Anordnung nach mindestens einem der vorangegangenen Ansprüche,
**dadurch gekennzeichnet, dass**
der vom Lüfterrad (4) erzeugte Kühlluftstrom das Gehäuseteil (1) entwärmt,
wobei das Lüfterrad (4) ein Radiallüfterrad ist und der erzeugte radiale Kühlluftstrom von einer am Gehäuseteil (1) vorgesehenen Lüfterhaube (3) umlenkbar ist in im Wesentlichen axiale Richtung.

10. Anordnung nach mindestens einem der vorangegangenen Ansprüche,
**dadurch gekennzeichnet, dass**
die innerhalb der jeweiligen Spur in Umfangsrichtung vorgesehenen Periodenlängen des jeweiligen Magnetisierungsverlaufs nach dem Nonius-Prinzip zugeordnet sind.

11. Anordnung nach mindestens einem der vorangegangenen Ansprüche, **dadurch gekennzeichnet, dass**
drei Spuren vorgesehen sind, wobei die Anzahl der Nordpol-Bereiche
- in einer ersten Spur 2^N,
- in einer zweiten Spur 2^N - 1,
- in einer dritten Spur 2^N - 2^(N/2)
beträgt, wobei N eine ganze Zahl ist,
und/oder dass
drei Spuren vorgesehen sind, wobei die Anzahl der Nordpol-Bereiche
- in einer ersten Spur 10 * N,
- in einer zweiten Spur 10 * N - 1,
- in einer dritten Spur 9 * N
beträgt.

12. Anordnung nach mindestens einem der vorangegangenen Ansprüche,
**dadurch gekennzeichnet, dass**
in jeder Spur die Magnetisierungsrichtung axial ausgeführt ist und einen in Umfangsrichtung sinusförmig verlaufenden Betrag aufweist,
und/oder dass
jeder Spur mindestens zwei Sensoren zugeordnet sind zur differentiellen Erfassung des Magnetisierungsverlaufs in Umfangsrichtung,
und/oder dass
das Gehäuseteil (1) für eine magnetfelderzeugende Einrichtung, wie Statorwicklung eines Elektromotors und/oder Bremsspulenwicklung einer elektromagnetisch betätigbaren Bremse, zumindest teilweise gehäusebildend ist,
und/oder dass
zwischen Gehäuseteil (1) und Sensoren ein Mittel zur Abschirmung (11) magnetischer Felder vorgesehene ist,
und/oder dass
die Sensoren Magnetfeldempfindliche Sensoren sind.

13. Elektromotor mit einer Anordnung nach mindestens einem der vorangegangenen Ansprüche,
**dadurch gekennzeichnet, dass**
die Welle die Rotorwelle (2) des Elektromotors ist und das Lüfterrad (4) auf der Rotorwelle (2) angeordnet ist.

## Claims

1. An arrangement for determining the angular position of a shaft,
wherein the arrangement has
- a housing part (1),
- a bearing,
- a fan impeller (4),
- a printed circuit board (5)
- and a shaft,
wherein the shaft is mounted in the housing part (1) with at least the bearing,
wherein the fan impeller (4) is connected non-rotatably to the shaft,
wherein the printed circuit board (5) is fastened to the housing part (1), wherein the normal direction of the printed circuit board (5) is oriented parallel to the shaft axis,
wherein the printed circuit board (5) is arranged between the housing part (1) and the fan impeller (4),
wherein
- magnetised regions of a pole disc (6) which is manufactured from ferrite material are provided on that side of the fan impeller (4), manufactured from plastics material, which is arranged towards the printed circuit board (5), which regions can be detected by sensors arranged on the printed circuit board (5), so that the angle value of the shaft can be acquired,
wherein the magnetised regions form three concentric tracks and at least one sensor on the printed circuit board is associated with each track,
wherein the axial direction of magnetisation is embodied in alternating manner in each track in the peripheral direction,
**characterised in that**
- a further permanent magnet (9) is arranged on the fan impeller (4), with which magnet on the printed circuit board (5) a sensor for acquiring the number of revolutions is associated,
- an angular acceleration sensor is connected to the printed circuit board (5), which sensor comprises an electrically conductive ring which is connected non-rotatably to the fan impeller (4),
the values acquired by the sensors, i.e. angle value, angular acceleration value and number-of-revolutions value, being transmitted via the same communication interface to a further electronic circuit,
the ring of the angular acceleration sensor being connected to the fan impeller (4) by a material-formed bond.

2. An arrangement according to Claim 1,
**characterised in that**
additionally a temperature sensor is arranged on the printed circuit board (5), the acquired value of which sensor is likewise transmitted via the communication interface.

3. An arrangement according to at least one of the preceding claims,
**characterised in that**
the shaft is arranged in a motor and in the stator windings of the motor, a means for acquiring the motor temperature and/or in the motor there is arranged a means for acquiring the torque transmitted by the shaft,
the acquired values being relayed via an electrical isolation means to the electronic circuit arranged on the printed circuit board (5), the acquired values also being transmitted to the further electronic circuit via the same digital interface.

4. An arrangement according to at least one of the preceding claims,
**characterised in that**
an energy store is arranged on the printed circuit board (5) for supplying an electronic component in the event of failure of the supply voltage associated with the electronic circuit arranged on the printed circuit board (5).

5. An arrangement according to at least one of the preceding claims,
**characterised in that**
the sensors are connected to an electronic circuit which is connected to the communication interface, with at least parts of the communication interface, the sensors the electronic circuit being arranged on the printed circuit board (5),
with evaluation electronics being arranged on the printed circuit board (5), to which electronics the sensor signals are supplied, and the evaluation electronics being embodied such that
- an angle value for the angular position of the fan impeller,
- a number-of-revolutions value of the fan impeller and
- an angular acceleration value of the fan impeller
are determined.

6. An arrangement according to at least one of the preceding claims,
**characterised in that**
the communication interface has at least one interface and/or one plug-in connector part.

7. An arrangement according to at least one of the preceding claims,
**characterised in that**
the communication interface is connected to a control unit of a converter which feeds an electric motor, the rotor shaft (2) of which is the shaft to which an acquired motor current value is supplied and which sets a motor voltage,
and/or **in that**
the acquired angle values and angular acceleration values are supplied to the control unit.

8. An arrangement according to at least one of the preceding claims,
**characterised in that**
in each track in the peripheral direction a south pole region follows a north pole region which is magnetised in the axial direction.

9. An arrangement according to at least one of the preceding claims,
**characterised in that**
the cooling air flow generated by the fan impeller (4) removes heat from the housing part (1), the fan impeller (4) being a radial fan impeller and the generated radial cooling air flow being able to be deflected into a substantially axial direction by a fan cowl (3) provided on the housing part (1).

10. An arrangement according to at least one of the preceding claims,
**characterised in that**
the period lengths of the respective magnetisation curve which are provided within the respective track in the peripheral direction are assigned in accordance with the Vernier principle.

11. An arrangement according to at least one of the preceding claims,
**characterised in that**
three tracks are provided, the number of north pole regions being
- in a first track, 2^N,
- in a second track, 2^N - 1,
- in a third track, 2^N - 2^(N/2)
N being a whole number,
and/or **in that**
three tracks are provided, the number of north pole regions being
- in a first track, 10 x N,
- in a second track, 10 x N - 1,
- in a third track, 9 x N.

12. An arrangement according to at least one of the preceding claims,
**characterised in that**
in each track the direction of magnetisation is axial and has a magnitude extending sinusoidally in the peripheral direction,
and/or **in that**
at least two sensors are associated with each track for differential acquisition of the magnetisation curve in the peripheral direction,
and/or **in that**
the housing part (1) at least partially forms a housing for a magnetic-field generating device, such as a stator winding of an electric motor and/or brake-coil winding of an electromagnetically actuatable brake,
and/or **in that**
a means for shielding (11) magnetic fields is provided between the housing part (1) and sensors,
and/or **in that**
the sensors are sensors sensitive to magnetic fields.

13. An electric motor having an arrangement according to at least one of the preceding claims,
**characterised in that**
the shaft is the rotor shaft (2) of the electric motor and the fan impeller (4) is arranged on the rotor shaft (2).

## Revendications

1. Dispositif pour déterminer la position angulaire d'un arbre,
sachant que le dispositif présente
- un élément formant boîtier (1),
- un palier,
- une roue de ventilateur (4),
- une carte à circuit imprimé (5)
- et un arbre
sachant que l'arbre est monté au moyen d'au moins ledit palier dans l'élément formant boîtier (1),
sachant que la roue de ventilateur (4) est reliée en solidarité de rotation à l'arbre, sachant que la carte à circuit imprimé (5) est fixée sur l'élément formant boîtier (1), sachant que la direction normale de la carte à circuit imprimé (5) est orientée parallèlement à l'axe de l'arbre,
sachant que la carte à circuit imprimé (5) est disposée entre l'élément formant boîtier (1) et la roue de ventilateur (4),
sachant que des régions magnétisées d'un disque polaire (6) fabriqué à partir de matériau à base de ferrite sont prévues sur le côté de la roue de ventilateur (4) fabriquée en matière plastique qui est disposé en direction de la carte à circuit imprimé (5), régions qui peuvent être détectées par des capteurs disposés sur la carte à circuit imprimé (5), de sorte que la valeur d'angle de l'arbre peut être enregistrée,
sachant que les régions magnétisées forment trois pistes concentriques et qu'au moins un capteur sur la carte à circuit imprimé est associé à chaque piste,
sachant que le sens de magnétisation réalisé axialement est réalisé en alternance en direction périphérique dans chaque piste,
**caractérisé en ce que**
- un autre aimant permanent (9) est disposé sur la roue de ventilateur (4), aimant auquel est associé sur la carte à circuit imprimé (5) un capteur destiné à enregistrer le nombre de révolutions,
- un capteur d'accélération de rotation est relié à la carte à circuit imprimé (5), capteur qui comprend une bague électriquement conductrice qui est reliée en solidarité de rotation à la roue de ventilateur (4),
sachant que les valeurs enregistrées par les capteurs, donc la valeur d'angle, la valeur d'accélération de rotation et la valeur de nombre de révolutions, sont transmises par l'intermédiaire de la même interface de communication à un autre circuit électronique, sachant que la bague du capteur d'accélération de rotation est reliée par liaison de matière à la roue de ventilateur (4).

2. Dispositif selon la revendication 1, **caractérisé en ce qu'**un capteur de température est en outre disposé sur la carte à circuit imprimé (5), capteur dont la valeur enregistrée est elle aussi transmise par l'intermédiaire de l'interface de communication.

3. Dispositif selon au moins une des revendications précédentes, **caractérisé en ce que** l'arbre est disposé dans un moteur et un moyen pour enregistrer la température du moteur est disposé dans les enroulements statoriques du moteur, et/ou un moyen pour enregistrer le couple de rotation transmis par l'arbre est disposé dans le moteur,
sachant que les valeurs enregistrées sont apportées par l'intermédiaire d'une séparation galvanique au circuit électronique disposé sur la carte à circuit imprimé (5),
sachant que les valeurs enregistrées sont également transmises par l'intermédiaire de la même interface numérique à l'autre circuit électronique.

4. Dispositif selon au moins une des revendications précédentes, **caractérisé en ce qu'**un accumulateur d'énergie est disposé sur la carte à circuit imprimé (5) afin d'alimenter un composant électronique en cas de panne de la tension d'alimentation affectée au circuit électronique disposé sur la carte à circuit imprimé (5).

5. Dispositif selon au moins une des revendications précédentes, **caractérisé en ce que** les capteurs sont reliés à un circuit électronique qui est relié à l'interface de communication, sachant qu'au moins des parties de l'interface de communication, les capteurs et le circuit électronique sont disposés sur la carte à circuit imprimé (5),
sachant qu'une unité électronique d'évaluation, à laquelle sont apportés les signaux des capteurs, est disposée sur la carte à circuit imprimé (5), et l'unité électronique d'évaluation est réalisée de telle sorte qu'on détermine
- une valeur d'angle pour la position angulaire de la roue de ventilateur,
- une valeur de nombre de révolutions de la roue de ventilateur et
- une valeur d'accélération de rotation de la roue de ventilateur.

6. Dispositif selon au moins une des revendications précédentes, **caractérisé en ce que** l'interface de communication présente au moins une interface et/ou un élément formant connecteur enfichable.

7. Dispositif selon au moins une des revendications précédentes, **caractérisé en ce que** l'interface de communication est reliée à une unité de régulation d'un convertisseur qui alimente un moteur électrique dont l'arbre de rotor (2) est ledit arbre, unité à laquelle est apportée une valeur enregistrée de courant de moteur et qui règle une tension électrique de moteur,
et/ou **en ce que** les valeurs d'angle et les valeurs d'accélération de rotation enregistrées sont apportées à l'unité de régulation.

8. Dispositif selon au moins une des revendications précédentes, **caractérisé en ce que**, dans chaque piste, une région de pôle sud magnétisée dans le sens axial fait suite en direction périphérique à une région de pôle nord.

9. Dispositif selon au moins une des revendications précédentes, **caractérisé en ce que** le flux d'air de refroidissement produit par la roue de ventilateur (4) refroidit l'élément formant boîtier (1), sachant que la roue de ventilateur (4) est une roue de ventilateur radial et que le flux d'air de refroidissement radial produit peut être dévié en direction pour l'essentiel axiale par un capot de ventilateur (3) prévu sur l'élément formant boîtier (1).

10. Dispositif selon au moins une des revendications précédentes, **caractérisé en ce que** les longueurs de période de l'allure de magnétisation respective prévue en direction périphérique à l'intérieur de chaque piste sont affectées selon le principe du vernier.

11. Dispositif selon au moins une des revendications précédentes, **caractérisé en ce que** trois pistes sont prévues, sachant que le nombre de régions de pôle nord est égal
- à 2^N dans une première piste,
- à 2^N - 1 dans une deuxième piste,
- à 2^N - 2^(N/2) dans une troisième piste,
sachant que N est un nombre entier,
et/ou **en ce que** trois pistes sont prévues, sachant que le nombre de régions de pôle nord est égal
- à 10 * N dans une première piste,
- à 10 * N - 1 dans une deuxième piste,
- à 9 * N dans une troisième piste.

12. Dispositif selon au moins une des revendications précédentes, **caractérisé en ce que** le sens de magnétisation est réalisé axialement dans chaque piste et présente une valeur à allure sinusoïdale en direction périphérique,
et/ou **en ce qu'**au moins deux capteurs, pour l'enregistrement différentiel de l'allure de magnétisation en direction périphérique, sont associés à chaque piste,
et/ou **en ce que** l'élément formant boîtier (1) forme au moins partiellement un boîtier pour un équipement produisant un champ magnétique, tel qu'un enroulement statorique d'un moteur électrique et/ou un enroulement de bobine de frein d'un frein à actionnement électromagnétique,
et/ou **en ce qu'**un moyen pour le blindage (11) des champs magnétiques est prévu entre l'élément formant boîtier (1) et les capteurs,
et/ou **en ce que** les capteurs sont des capteurs sensibles au champ magnétique.

13. Moteur électrique avec un dispositif selon au moins une des revendications précédentes, **caractérisé en ce que** l'arbre est l'arbre de rotor (2) du moteur électrique, et la roue de ventilateur (4) est disposée sur l'arbre de rotor (2).
